# EUROPEAN PATENT APPLICATION

(11) **EP 2 441 515 A1**
(43) Date of publication of application: **18.04.2012**
(21) Application number: 11183739.9
(22) Date of filing: 03.10.2011
(51) Int. Cl.: B01J 23/50, B01J 35/10, B01J 37/03, B01D 53/94

(54) **Catalyst and method of manufacture**

(30) Priority: 13.10.2010 US 903908
(71) Applicant: General Electric Company, Schenectady, NY 12345 (US)
(72) Inventor: Lewis, Larry Neil, Niskayuna, NY 12309 (US); Colborn, Robert Edgar, Niskayuna, NY 12309 (US); Mhadeshwar, Ashish Balkrishna, Niskayuna, NY 12309 (US); Hancu, Dan, Niskayuna, NY 12309 (US)
(74) Representative: Szary, Anne Catherine

(57) **Abstract**

A catalyst composition includes a catalytic metal secured to a porous substrate. The substrate has pores that are templated. The catalyst composition is prepared by a process that includes the steps of mixing (98) a catalytic metal salt, a templating agent, and water to form a mixture, adding (100) a substrate precursor to the mixture to form a slurry, and calcining (110) the slurry to form a substrate having a porous template that is capable of supporting the catalyst composition.

## Description

### BACKGROUND OF THE INVENTION

The subject matter disclosed herein relates to catalysts and methods for making catalysts, and more particularly, catalysts for removing nitrogen oxides (NOₓ) from exhaust gas streams.

Current emission control regulations encourage the use of catalysts in the exhaust systems of vehicles in order to convert carbon monoxide (CO), hydrocarbons (HC), and NOₓ produced during engine operation into less harmful exhaust gases. Vehicles equipped with diesel engines may offer the benefit of increased fuel economy. Such vehicles may benefit from exhaust after-treatment systems that employ one or more catalysts to assist in chemically converting NOₓ, HC, CO, and other pollutants into less harmful compounds prior to discharge of the exhaust gases to the environment.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a catalyst composition includes a catalytic metal secured to a substrate. The substrate has pores that are templated. The catalyst composition is prepared by a process that includes the steps of mixing a catalytic metal salt, a templating agent, and water to form a mixture, adding a substrate precursor to the mixture to form a slurry, and calcining the slurry to form a substrate having a porous template that is capable of supporting the catalyst composition.

In a second embodiment, a catalyst composition includes a catalytic metal secured to a porous substrate. The porous substrate is a product of adding a substrate precursor to a mixture including a catalytic metal salt, a templating agent, and water.

In a third embodiment, a method includes mixing a catalytic metal salt, a templating agent, and water to form a mixture, adding a substrate precursor to the mixture to form a slurry, and calcining the slurry to form a substrate having a porous template that is capable of supporting a catalyst composition.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 depicts the chemical structures of various surfactants that can be used in the templating agent in accordance with the technique disclosed herein for manufacturing a catalyst;
FIG. 2 depicts the chemical structure of α-cyclodextrin that can be used in the templating agent in accordance with the technique disclosed herein;
FIG. 3 depicts the chemical structure of β -cyclodextrin that can be used in the templating agent in accordance with the technique disclosed herein;
FIG. 4 depicts the chemical structure of γ -cyclodextrin that can be used in the templating agent in accordance with the technique disclosed herein;
FIG. 5 depicts the chemical structure of a crown ether that can be used in the templating agent in accordance with the technique disclosed herein;
FIG. 6 is a flow chart that shows a process for manufacturing a catalyst in accordance with one embodiment of the present invention;
FIG. 7 is a graph showing the NOₓ conversion of a catalyst manufactured in accordance with one embodiment of the present invention;
FIG. 8 is a graph showing the activity for a catalyst manufactured in accordance with one embodiment of the present invention;
FIG. 9 is a graph showing the NOₓ conversion of a catalyst manufactured in accordance with one embodiment of the present invention; and
FIG. 10 is a bar chart showing the NOₓ conversion of a catalyst manufactured in accordance with one embodiment of the present invention.

### DETAILED DESCRIPTION OF THE INVENTION

As used herein, without further qualifiers, "mesoporous" refers to a material that includes pores with diameters in a range from about 2 nanometers to 50 nanometers. A "catalyst" is a substance that can cause a change in the rate of a chemical reaction without itself being consumed in the reaction. A "slurry" is a mixture of a liquid and finely divided particles. A "powder" is a substance including finely dispersed solid particles. "Templating" refers to a controlled patterning and "templated" refers to determined control of an imposed pattern and may include molecular self-assembly. A "monolith" may be a ceramic block having a number of channels, and may be made by extrusion of clay, binders, and additives that are pushed through a dye to create a structure. Approximating language, as used herein throughout the specification and claims, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term.

Disclosed herein is a catalyst composition for reducing NOₓ that is present in an exhaust gas stream including emissions generated from combustion in furnaces, ovens, engines, and so forth. When manufactured using methods disclosed herein, the resulting catalyst composition may possess unexpectedly improved catalyst activity for NOₓ reduction. For example, catalyst compositions produced using exemplary methods may be about 1.2 times more active than prior catalyst compositions. In other words, catalyst compositions produced using exemplary methods disclosed herein, may convert more NOₓ to nitrogen, water, and/or ammonia than prior catalyst compositions. Exemplary catalyst compositions include a catalytic metal disposed on a substrate. The substrate has pores of a size that may be effective to prohibit aromatic species from poisoning the catalyst composition. When the catalyst composition is employed to reduce NOₓ generated in emissions from combustion sources, a variety of hydrocarbons can be effectively used as a reductant. In an exemplary embodiment, diesel fuel can be used as a reductant.

Exemplary catalyst compositions disclosed herein may be manufactured by adding a substrate precursor to a mixture that includes a catalytic metal salt, a suitable templating agent, and water, as described in detail below. A suitable substrate precursor may include an inorganic alkoxide. During preparation, the catalytic metal salt, the templating agent, and water are mixed to form a mixture. The addition of the substrate precursor creates a slurry or gel. The slurry or gel is calcined to produce the substrate, with the catalytic metal incorporated into the substrate to produce the catalyst composition. The use of the templating agent in the mixture controls pore formation in the substrate.

An average exemplary catalytic composition particle size is less than about 100 nanometers. In one embodiment, the average catalytic composition particle size may be between about 0.1 nanometers to 1 nanometer, 1 nanometer to 5 nanometers, 5 nanometers to 15 nanometers, 15 nanometers to 25 nanometers, 25 nanometers to 50 nanometers, or greater than about 50 nanometers.

Exemplary catalyst compositions may include a catalytic metal. Suitable catalytic metals may include one or more alkali metals, alkaline earth metals, transition metals, and main group metals. Examples of suitable catalytic metals include, but are not limited to, silver, platinum, gold, palladium, iron, nickel, cobalt, gallium, indium, ruthenium, rhodium, osmium, and iridium. An exemplary catalytic metal is silver. In one embodiment, the catalytic metal may include a combination of two or more of the foregoing metals. For example, the catalytic metal may include a promoting metal, which is a metal that enhances the action of a catalyst. In one embodiment, the promoting metal may be selected from the group consisting of gallium, indium, gold, vanadium, zirconium, zinc, tin, bismuth, cobalt, rhodium, platinum, molybdenum, and tungsten. The promoting metal may be present in an amount between about 0.1 weight percent to 20 weight percent, 0.5 weight percent to 15 weight percent, 1 weight percent to 12 weight percent based upon the total weight of the catalyst composition.

The catalytic metals may be present in the catalyst composition in an amount greater than about 0.025 mole percent. The amount selected may be based on end use parameters, economic considerations, desired efficacy, and the like. For example, the amount of catalytic metals in the catalyst composition may be between about 0.025 mole percent to 0.2 mole percent, 0.2 mole percent to 1 mole percent, 1 mole percent to 5 mole percent, 5 mole percent to 10 mole percent, 10 mole percent to 25 mole percent, 25 mole percent to 35 mole percent, 35 mole percent to 45 mole percent, 45 mole percent to 50 mole percent, or greater than about 50 mole percent. An exemplary amount of catalytic metal in the catalyst composition is about 1.5 mole percent to 5 mole percent.

The catalytic metals in the catalyst composition may occur in clusters that may be between about 1 atom to 10 atoms, 2 atoms to 5 atoms, or 2 atoms to 3 atoms in size. Such clusters may be small enough to fit within the pores of the substrate discussed in more detail below. Various methods, such as visible ultraviolet (UV) spectra, may be used to determine the number of atoms in the catalytic metal clusters. In addition, various methods, such as transmission electron microscopy (TEM), may be used to confirm that the clusters produced via exemplary methods are about 10 Angstroms (Å) or less in size.

The substrate of the catalyst composition may include an inorganic material. Suitable inorganic materials include, but are not limited to, inorganic oxides, inorganic carbides, inorganic nitrides, inorganic hydroxides, inorganic oxides, inorganic carbonitrides, inorganic oxynitrides, inorganic borides, and inorganic borocarbides. In one embodiment, the inorganic oxide may have hydroxide coatings. In another embodiment, the inorganic oxide may be a metal oxide. The metal oxide may have a hydroxide coating. Other suitable metal inorganic materials include, but are not limited to, one or more metal carbides, metal nitrides, metal hydroxides, metal carbonitrides, metal oxynitrides, metal borides, or metal borocarbides. Metallic cations used in the foregoing inorganic materials can be transition metals, alkali metals, alkaline earth metals, rare earth metals, or the like.

Examples of suitable inorganic oxides that may be used in the substrate include, but are not limited to, silica (SiO₂) alumina (Al₂O₃), titania (TiO₂) zirconia (ZrO₂) ceria (CeO₂), manganese oxide (MnO₂) zinc oxide (ZnO), iron oxides (e.g., FeO, β-Fe₂O₃, γ-Fe₂O₃, Fe₃O₄, or the like), calcium oxide (CaO), and manganese dioxide (MnO₂ and Mn₃O₄). Examples of suitable inorganic carbides include, but are not limited to, silicon carbide (SiC), titanium carbide (TiC), tantalum carbide (TaC), tungsten carbide (WC), hafnium carbide (HfC), or the like. Examples of suitable nitrides include, but are not limited to, silicon nitrides (Si₃N₄), titanium nitride (TiN), or the like. Examples of suitable borides include, but are not limited to, lanthanum boride (LaB₆), chromium borides (CrB and CrB₂), molybdenum borides (MoB₂, Mo₂B₅ and MoB), tungsten boride (W₂B₅), or the like. An exemplary inorganic substrate is alumina. The alumina may be crystalline or amorphous.

As noted above, the substrate is porous. In one embodiment, the average pore size of the substrate is controlled and may be selected to reduce or eliminate poisoning. Poisoning may affect catalytic ability, and may be caused by aromatic species present in the reductant or in the exhaust gas stream. In another embodiment, the average pore size of the substrate is controlled and selected, such that the catalytic metal clusters described above may fit within the pores of the substrate.

The substrate may be mesoporous and have average pore diameters greater than about 2 nanometers. For example, the average pore sizes of the substrate may be between about 2 nanometers to 3 nanometers, 3 nanometers to 5 nanometers, 5 nanometers to 7 nanometers, 7 nanometers to 10 nanometers, 10 nanometers to 15 nanometers, 15 nanometers to 17 nanometers, 17 nanometers to 20 nanometers, 20 nanometers to 25 nanometers, 25 nanometers to 30 nanometers, 30 nanometers to 35 nanometers, 35 nanometers to 45 nanometers, 45 nanometers to 50 nanometers, or greater than about 50 nanometers. The average pore size may be measured using nitrogen adsorption measurements with the Brunauer Emmett Teller (BET) method. The BET theory explains the physical adsorption of gas molecules on a solid surface and serves as the basis for the measurement of the specific surface area of a material. An exemplary substrate is a mesoporous substrate.

The pore size may have a narrow monomodal distribution. For example, the pore size distribution polydispersity index of the pores may be less than about 1.5, 1.3, or 1.1. In one embodiment, the distribution in diameter sizes may be bimodal, or multimodal. The porous materials may be manufactured via a templating process, which is described below.

The pores may have a single point pore volume greater than about 0.5 cm³/gram. For example, the single point pore volume may be between about 0.5 cm³/gram to 0.53 cm³/gram, 0.53 cm³/gram to 0.57 cm³/gram, or 0.57 cm³/gram to 0.6 cm³/gram. An exemplary single point pore volume may be about 0.53 cm³/gram.

The pores may be distributed in a controlled and repeating fashion to form a pattern. In one embodiment, the pore arrangement is regular and not random. The pores may be ordered and may have an average periodicity. The average pore spacing may be controlled and selected based on the surfactant selection. In one embodiment, the pores are unidirectional, are periodically spaced, and have an average periodicity. The pores of the porous substrate may have a spacing of greater than about 20 Å. For example, the spacing of the pores may be between about 20 Å to 40 Å, 40 Å to 50 Å, 50 Å to 100 Å, 100 Å to 150 Å, 150 Å to 200 Å, 200 Å to 250 Å, 250 Å to 300 Å, or greater than about 300 Å. The average pore spacing (periodicity) may be measured using small angle X-ray scattering.

The porous substrate may have a surface area greater than about 0.5 m²/gram. For example, the surface area may be between about 0.5 m²/gram to 10 m²/gram, 10 m²/gram to 100 m²/gram, 100 m²/gram to 200 m²/gram, or 200 m²/gram to 1200 m²/gram. In one embodiment, the porous substrate has a surface area that may be between about 0.5 m²/gram to 200 m²/gram. In another embodiment, the porous substrate has a surface area that may be between about 200 m²/gram to 250 m²/ gram, 250 m²/gram to 500 m²/ gram, 500 m²/gram to 750 m²/ gram, 750 m²/gram to 1000 m²/ gram, 1000 m²/gram to 1250 m²/ gram, 1250 m²/gram to 1500 m²/ gram, 1500 m²/gram to 1750 m²/ gram, 1750 m²/gram to 2000 m²/ gram, or greater than about 2000 m²/ gram.

The porous substrate may be present in the catalyst composition in an amount that is greater than about 50 mole percent. For example, the amount of porous substrate present in the catalyst composition may be between about 50 mole percent to 60 mole percent, 60 mole percent to 70 mole percent, 70 mole percent to 80 mole percent, 80 mole percent to 90 mole percent, 90 mole percent to 95 mole percent, 95 mole percent to 98 mole percent, 98 mole percent to 99 mole percent, or 99 mole percent to 99.9975 mole percent.

In one method of manufacturing the catalyst composition, the catalytic metal salt, the templating agent, and water are mixed in a vessel to form a mixture, to which the substrate precursor is added to form a slurry, as described in detail below. The substrate precursor may include an inorganic alkoxide. The slurry may be filtered, washed, dried, and calcined to yield a solid catalyst composition that includes the catalytic metal salt disposed on the porous substrate. In certain embodiments, the slurry may be pyrolyzed prior to calcination, as described below. During the calcination process, the metal salt may be reduced to a catalytic metal. Prior catalyst compositions may use spray drying to remove any organic solvents and form dry powder. However, spray drying may not be necessary for exemplary catalyst compositions because no organic solvents are used and thus, need not be removed. Instead, calcination may be used to remove any remaining templating agent and thus, to produce a dry powder. Calcination may be simpler, faster, and less expensive than spray drying. Even so, spray drying is an alternative method that may be used in certain embodiments. Further, by not using organic solvents, exemplary methods of making catalyst compositions may reduce personal exposure, simplify personal protective equipment requirements, reduce ventilation requirements, reduce the burden of compliance with environmental rules and regulations, etc.

The calcination may be conducted at temperatures between about 350 degrees Celsius to 400 degrees Celsius, 400 degrees Celsius to 500 degrees Celsius, 500 degrees Celsius to 600 degrees Celsius, 600 degrees Celsius to 700 degrees Celsius, or 700 degrees Celsius to 800 degrees Celsius. In one embodiment, the calcination is conducted at a temperature of about 550 degrees Celsius. The calcination may be conducted for a period between about 10 minutes to 30 minutes, 30 minutes to 60 minutes, 60 minutes to 1 hour, 1 hour to 10 hours, 10 hours to 24 hours, or 24 hours to 48 hours.

Suitable inorganic alkoxides that may be added to the mixture as the substrate precursor include, but are not limited to, one or more of tetraethyl orthosilicate, tetramethyl orthosilicate, aluminum isopropoxide, aluminum tributoxide, aluminum ethoxide, aluminum-tri-sec-butoxide, aluminum tert-butoxide, antimony (III) ethoxide, antimony (III) isopropoxide, antimony (III) methoxide, antimony (III) propoxide, barium isopropoxide, calcium isopropoxide, calcium methoxide, chloro triisopropoxy titanium, magnesium di-tert-butoxide, magnesium ethoxide, magnesium methoxide, strontium isopropoxide, tantalum (V) butoxide, tantalum (V) ethoxide, tantalum (V) ethoxide, tantalum (V) methoxide, tin (IV) tert-butoxide, diisopropoxytitanium bis(acetylacetonate) solution, titanium (IV) (triethanolaminato) isopropoxide solution, titanium (IV) 2-ethylhexyloxide, titanium (IV) bis(ethyl acetoacetato) diisopropoxide, titanium (IV) butoxide, titanium (IV) butoxide, titanium (IV) diisopropoxide bis(2,2,6,6-tetramethyl-3,5-heptanedionate), titanium (IV) ethoxide, titanium (IV) isopropoxide, titanium (IV) methoxide, titanium (IV) tert-butoxide, vanadium (V) oxytriethoxide, vanadium (V) oxytriisopropoxide, yttrium (III) butoxide, yttrium (III) isopropoxide, zirconium (IV) bis(diethyl citrato) dipropoxide, zirconium (IV) butoxide, zirconium (IV) diisopropoxidebis (2,2,6,6-tetramethyl-3,5-heptanedionate), zirconium (IV) ethoxide, zirconium (IV) isopropoxide zirconium (IV) tert-butoxide, zirconium (IV) tert-butoxide, or the like. An exemplary inorganic alkoxide is aluminum sec-butoxide.

After the inorganic alkoxide is added to the mixture, the slurry may include the inorganic alkoxide in an amount greater than about 1 weight percent, based on the weight of the slurry. For example, the amount of the inorganic alkoxide in the slurry may be between about 1 weight percent to 5 weight percent, 5 weight percent to 10 weight percent, 10 weight percent to 15 weight percent, 15 weight percent to 20 weight percent, 20 weight percent to 30 weight percent, 30 weight percent to 40 weight percent, 40 weight percent to 50 weight percent, or greater than about 50 weight percent.

Modifiers may be used to control hydrolysis kinetics of the inorganic alkoxides and are an optional component of the mixture. Suitable modifiers may include, but are not limited to, one or more of ethyl acetoacetate (EA), ethylene glycol (EG), triethanolamine (TA), or the like. In one embodiment, the reactive solution includes a modifier in an amount greater than about 0.1 weight percent, based on the weight of the mixture. For example, the amount of modifier present may be between about 0.1 weight percent to 1 weight percent, 1 weight percent to 2 weight percent, 2 weight percent to 3 weight percent, 3 weight percent to 4 weight percent, 4 weight percent to 5 weight percent, or greater than about 5 weight percent.

The templating agents of the mixture serve as templates and may facilitate the production of substrates with directionally aligned tubular meso-channel forms, or pores. Control of the pore characteristic may, in turn, provide control of the particle size of catalytic metal by reducing the catalytic metal lability or propensity to agglomerate. The particle size of catalytic metal may be controlled, with respect to pore formation of the porous template, by controlling or affecting one or more of pore size, pore distribution, pore spacing, or pore dispersity.

The mixture may include the templating agent in an amount greater than about 0.1 weight percent, based on the weight of the mixture. For example, the amount of templating agent present may be between about 0.01 weight percent to 0.2 weight percent, 0.2 weight percent to 1 weight percent, 1 weight percent to 5 weight percent, 5 weight percent to 10 weight percent, 10 weight percent to 25 weight percent, 25 weight percent to 35 weight percent, 35 weight percent to 45 weight percent, 45 weight percent to 50 weight percent, or greater than about 50 weight percent. An exemplary amount of templating agent, based on the weight of the mixture, is about 1.5 weight percent to 5 weight percent.

Selection of the type(s) and amounts of the templating agent may affect or control the pore characteristics of the resultant templated substrate. Suitable templating agents may include one or more surfactants. Suitable surfactants may include, but are not limited to, cationic surfactants, anionic surfactants, non-ionic surfactants, or Zwitterionic surfactants. In one embodiment, the templating agent may include one or more cyclic species. Examples of such cyclic species may include cyclodextrin and crown ethers.

Suitable cationic surfactants may include, but are not limited to, cetyltrimethyl ammonium bromide (CTAB), cetylpyridinium chloride (CPC), polyethoxylated tallow amine (POEA), benzalkonium chloride (BAC), and benzethonium chloride (BZT). Other suitable cationic surfactants may include those having a chemical structure denoted by CH₃(CH₂)₁₅N(CH₃)₃--Br, CH₃(CH₂)₁₅--(PEO)ₙ--OH where n=2 to 20 and where PEO is polyethylene oxide, CH₃(CH₂)₁₄COOH and CH₃(CH₂)₁₅NH₂. Other suitable cationic surfactants may include one or more fluorocarbon surfactants, such as C₃F₇O(CF₂CF₃CF₂O)₂CFCF₃--CONH(CH₂)₃N(C₂H₅)₂CH₃I) commercially available as FC-4.

Suitable anionic surfactants may include, but are not limited to, one or more of sodium dodecyl sulfate (SDS), ammonium lauryl sulfate, alkyl sulfate salts, sodium laureth sulfate (also known as sodium lauryl ether sulfate (SLES)), alkyl benzene sulfonate, soaps, fatty acid salts, or sodium dioctyl sulfonate (AOT). Suitable Zwitterionic surfactants may include, but are not limited to, dodecyl betaine, dodecyl dimethylamine oxide, cocamidopropyl betaine, or coco ampho-glycinate.

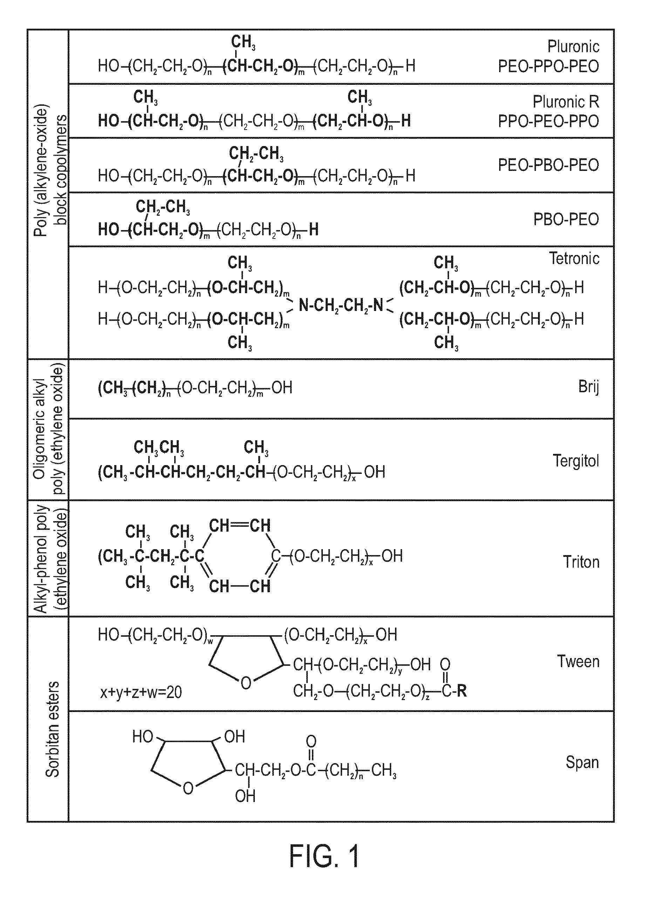

Nonionic surfactants may have polyethylene oxide molecules as hydrophilic groups. Suitable ionic surfactants may include, but are not limited to, alkyl poly(ethylene oxide), copolymers of poly(ethylene oxide) and poly(propylene oxide), commercially called Poloxamers or Poloxamines and commercially available under the trade name PLURONICS®. Examples of copolymers of poly(ethylene oxide) are (EO)₁₉(PO)₃₉(EO)₁₁, (EO)₂₀(PO)₆₉(EO)₂₀, (EO)₁₃(PO)₃₀(EO)₁₃, poly(isobutylene)-block-poly (ethylene oxide), poly (styrene)-block-poly (ethylene oxide) diblock copolymers, and block copolymer hexyl-oligo (p-phenylene ethynylene)-poly (ethylene oxide). Additional examples of copolymers of poly(ethylene oxide) are shown in FIG. 1.

Suitable non-ionic surfactants may include, but are not limited to, one or more alkyl polyglucosides, octylphenol ethoxylate, decyl maltoside, fatty alcohols, cetyl alcohol, oleyl alcohol, cocamide monoethanolamine, cocamide diethanolamine, cocamide triethanolamine, 4-(1,1,3,3-tetramethyl butyl)phenyl-poly (ethylene glycol), polysorbitan monooleate, or amphiphilic poly (phenylene ethylene) (PPE). Suitable poly glucosides may include octyl glucoside. Other suitable non-ionic surfactants may include long-chain alkyl amines, such as primary alkylamines and N,N-dimethyl alkylamines. Suitable primary alkylamines may include dodecylamine and hexadecylamine. Suitable N,N-dimethyl alkylamines may include N,N-dimethyl dodecylamine or N,N-dimethyl hexadecylamine.

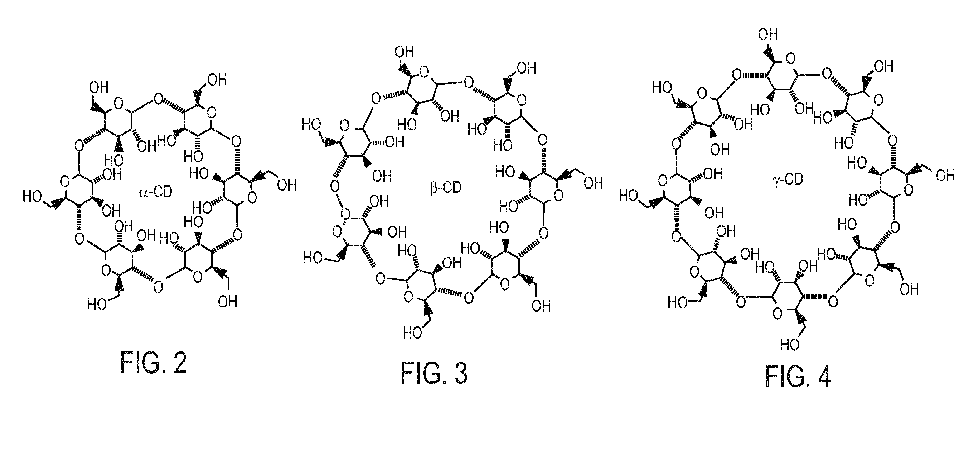

In one embodiment, the templating agent may include cyclodextrin. Cyclodextrins may include cyclic oligosaccharides that include 5 or more α-D-glucopyranoside units linked 1 to 4, as in amylose (a fragment of starch). Suitable cyclodextrins in the templating agent may include 5-membered to about 150-membered cyclic oligosaccharides. Exemplary cyclodextrins include a number of glucose monomers ranging from six to eight units in a ring. Suitable cyclodextrins are α-cyclodextrin, a six membered sugar ring molecule; β-cyclodextrin, a seven sugar ring molecule; γ-cyclodextrin, an eight sugar ring molecule; or the like. The structures for the α-cyclodextrin, β-cyclodextrin, and γ-cyclodextrin are shown in FIGS. 2-4, respectively.

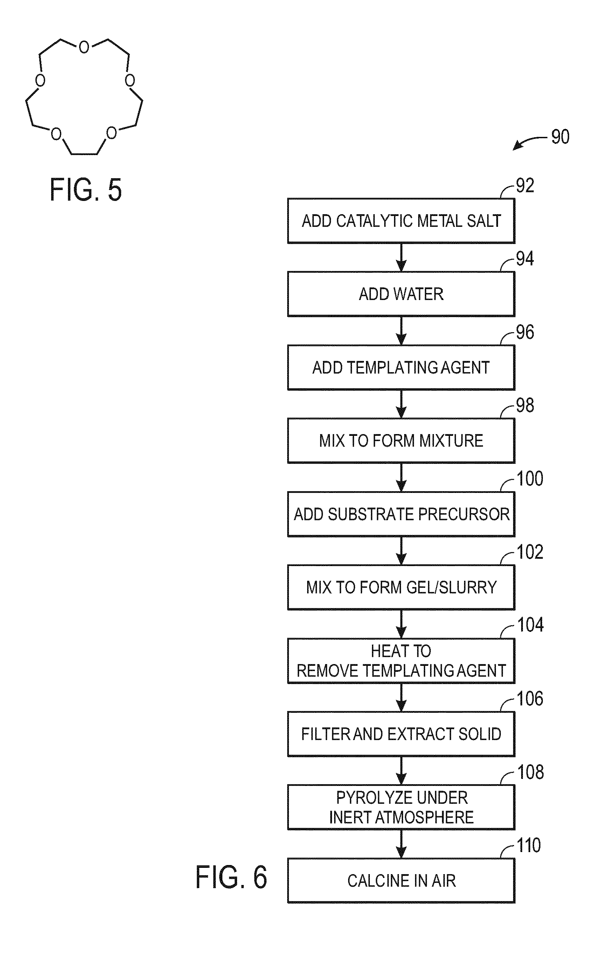

As noted above, the templating agent can include crown ethers. Crown ethers are heterocyclic chemical compounds that include a ring that includes several ether groups. Suitable crown ethers may include oligomers of ethylene oxide, the repeating unit being ethyleneoxy, i.e., --CH₂CH₂O--. Useful members of this series may include the tetramer (n=4), the pentamer (n=5), and the hexamer (n=6). Crown ethers derived from catechol may be used in the templating agent. Crown ethers that strongly bind certain types of cations to form complexes may be included in the templating agents. The oxygen atoms in the crown ether may coordinate with a cation located at the interior of the ring, whereas the exterior of the ring may be hydrophobic. For example, 18-crown-6 has high affinity for potassium cation, 15-crown-5 for sodium cation, and 12-crown-4 for lithium cation. An exemplary crown ether is 18-crown-6 depicted in FIG. 5 as octylphenol ethoxylate, which is commercially available as TRITON™ X 114.

Suitable metal salts that may be used to form the mixture include the salts of transition metals. In one embodiment, metal salts may include one or more metals selected from silver, platinum, gold, palladium, iron, nickel, cobalt, or the like. Suitable salts may include halides, sulfates, nitrates, sulfides, or the like. An exemplary salt is silver nitrate.

The metal salt may be present in the mixture in an amount greater than about 0.1 weight percent, based on the total weight of the mixture. For example, the amount of the metal salt present may be between about 0.01 weight percent to 0.2 weight percent, 0.2 weight percent to 1 weight percent, 1 weight percent to 5 weight percent, 5 weight percent to 10 weight percent, 10 weight percent to 25 weight percent, 25 weight percent to 35 weight percent, 35 weight percent to 45 weight percent, 45 weight percent to 50 weight percent, or greater than about 50 weight percent. An exemplary amount of metal salt in the mixture is about 1.5 weight percent to 5 weight percent.

FIG. 6 is a flow chart 90 that shows an exemplary process for manufacturing an embodiment of the catalytic composition. In a first step 92, the catalytic metal salt is added to a vessel. In a second step 94, water is added to the vessel to achieve a desired concentration of the catalytic metal salt. In a third step 96, the templating agent is added to the vessel. In a fourth step 98, catalytic metal salt, water, and templating agent are mixed to form the mixture. In certain embodiments, steps 92, 94, and 96 may be performed in a different order or simultaneously. In addition, in other embodiments, mixing may occur as the components are added to the vessel. In further embodiments, an optional modifier may be added in addition to the other components. In a fifth step 100, the substrate precursor is added to the mixture. In a sixth step 102, the vessel contents are mixed to form the gel or slurry. In certain embodiments, steps 100 and 102 may be performed simultaneously. In other words, the vessel contents may continue to be mixed while the substrate precursor is added to the vessel. In a seventh step 104, the vessel contents are heated to vaporize the templating agent and modifier (if used). In an eighth step 106, the remaining material in the vessel is removed and filtered to separate any remaining liquid from the solid that constitutes the catalyst composition. In a ninth step 108, the solid is pyrolyzed under an inert atmosphere, such as nitrogen, at a high temperature to further remove any remaining liquid. In certain embodiments, step 108 may be omitted. In a tenth step 110, the solid is calcined in air at a high temperature to substantially remove any remaining liquid. The high temperature used during pyrolysis or calcination helps to vaporize any remaining liquid. Further, the oxygen present in air during calcination may enable any remaining liquid to be combusted. By performing pyrolysis prior to calcination, the amount of material that may be combusted during calcination is reduced.

The catalyst composition obtained from the method described above may be in powdered form. Alternatively, the catalyst composition may be manufactured in the form of a monolith. In one embodiment, the catalyst composition may be disposed on a prefabricated monolithic core. The prefabricated monolith core with the catalyst composition disposed thereon may be subjected to freeze-drying as well as to calcining to produce a monolithic catalyst composition.

After formation, the catalyst composition may be disposed in an exhaust gas stream of an automobile, a locomotive, or the like having NOₓ therein. The catalyst composition contacts and reduces NOₓ to nitrogen in the presence of a reductant, such as diesel fuel, during determined operating conditions. The catalyst composition may be disposed into the exhaust gas stream either in powdered form or in the form of a monolith.

### EXAMPLE

The following example illustrates a method and embodiment in accordance with the invention, and as such should not be construed as imposing limitations upon the claims. The example demonstrates the manufacture of the catalyst composition described herein and demonstrates its performance compared with other catalyst compositions that are commercially available. Unless specified otherwise, all components are commercially available from suitable chemical suppliers, such as Alpha Aesar, Incorporated of Ward Hill, MA, Spectrum Chemical Manufacturing Corporation of Gardena, CA, and the like.

### Manufacture of an Exemplary Catalyst Composition

The catalyst composition was designated as Sample 44-124-2. An amount of γ-cyclodextrin served as the templating agent. The catalyst composition was manufactured by making a mixture and a slurry.

The mixture included AgNO₃ (0.54 g, 3.18 mmol), 100 mL of water, and γ-cyclodextrin (23.2 g). These were combined in a 500 mL, 3-necked round bottom flask equipped with a syringe pump (Harvard Apparatus syringe pump 22), a condenser, and a mechanical stirrer. The Al(OBu)₃ (47.2 g, 0.192 mol finally added) was added to the mixture via the syringe pump over a period of about 2.4 hours, forming the slurry. The slurry was heated to about 100 degrees Celsius for 24 hours.

The contents were cooled and filtered. The obtained solid was subjected to Soxhlet extraction with ethanol. The extracted solid was dried in a vacuum oven at 30 mmHg and 100 degrees Celsius. The dry reaction product was heated under a flow of nitrogen (pyrolyzed) in a tube furnace from room temperature to 550 degrees Celsius at a heating rate of 2 degrees Celsius/minute. Once achieved, the temperature was maintained at 550 degrees Celsius for 1 hour. Afterward, the reaction product was calcined in a flow of air at 550 degrees Celsius for 5 hours to produce the catalyst composition.

### Test Conditions

The test conditions for the aforementioned catalyst composition were as follows. The catalyst was pretreated with 7 percent H₂O and 9 percent O₂ for 7 hours at 450 degrees Celsius to "age" the catalyst. The sample from the example described above was disposed in a high throughput screen (HTS) reactor to determine its nitrogen oxide conversion capabilities in a simulated exhaust gas stream. The reactor had 32 tubes, each tube of which could receive a catalyst composition. No catalyst was placed in tube #1, which was used to measure the NOₓ concentration in the exhaust gas stream. The catalyst composition samples were placed in the other tubes and the reduction in NOₓ concentration was measured. The reduction in NOₓ concentration related to catalytic activity of the catalyst compositions.

The simulated exhaust gas stream included an exhaust gas composition and a reductant. Three samples of the catalyst were tested in each run and the catalyst was tested at three temperatures: 300 degrees Celsius, 350 degrees Celsius, and 400 degrees Celsius. The exhaust gas composition was 9 percent O₂, 300 ppm NO, 7 percent H₂O and the balance N₂. The reductant used was a distillation cut (<210 degrees Celsius) of summer blend ultra low sulfur diesel (ULSD) fuel. For all the samples, using the HTS reactor, the C₁:NO ratio used in the exhaust gas composition was about 6 (C₁:NO is defined as the number of carbon atoms in the reductant stream per number of nitrogen oxide (NO) molecules).

### Performance of the Exemplary Catalyst Composition

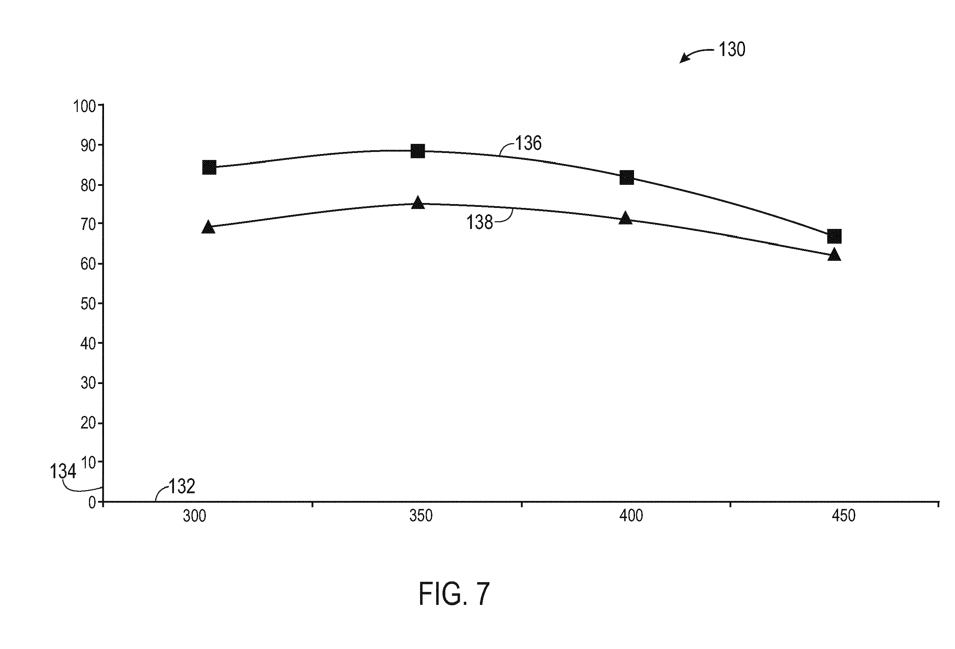

FIG. 7 shows a graph 130 of the NOₓ conversion results for the sample from the example described above relative to a comparative catalyst composition that does not include a substrate manufactured using exemplary techniques. An x-axis 132 represents temperature in degrees Celsius and a y-axis 134 represents the percent conversion of NOₓ to nitrogen and ammonia. Both catalysts were tested using the simulated exhaust gas stream as described above, which included the distillation cut of the summer blend ULSD fuel.

With reference to FIG. 7, the sample manufactured according to an embodiment showed relatively better NOₓ conversion results 136 relative to the results 138 of the comparative catalyst composition. In FIG. 7, the NOₓ conversion for the exemplary sample was in a range of from about 68 percent to 90 percent. The comparative catalyst composition showed relatively lower conversion capabilities compared with the catalyst composition manufactured using the templating agent.

The exemplary catalyst composition reduced more than about 50 percent of the NOₓ present in the exhaust gas stream under determined use conditions. In one embodiment, the amount of NOₓ reduction was at least about 10 percent, at least about 15 percent, or at least about 20 percent relatively more than other comparative catalyst compositions. In addition, the catalytic performance for exemplary catalysts may be available over a temperature range of from about 200 degrees Celsius to 500 degrees Celsius. Exemplary catalyst compositions may reduce NOₓ while using reductants that include aromatic species or hydrocarbon species that on average have less than four carbon atoms per molecule, such as diesel fuel.

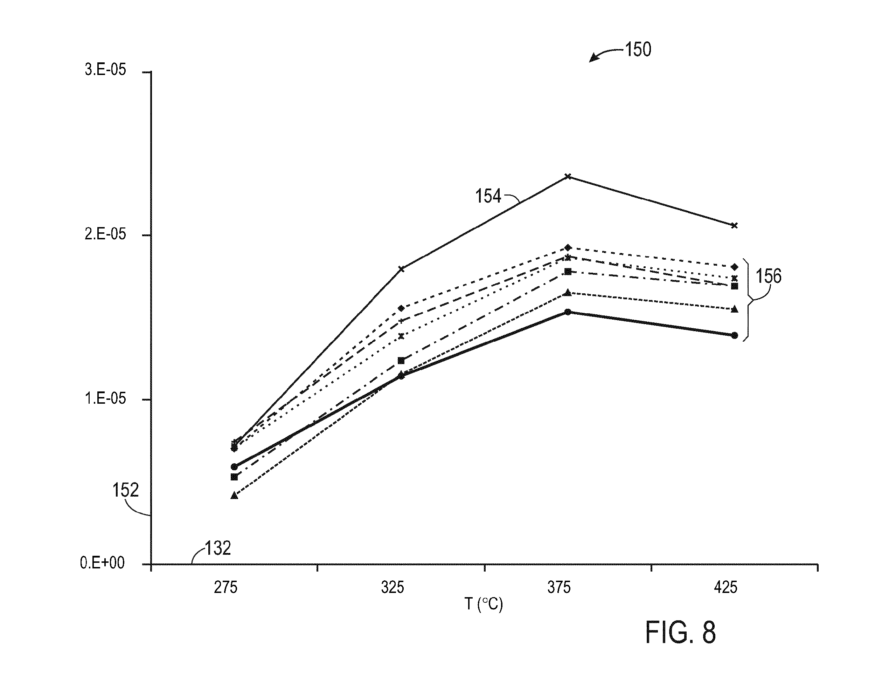

FIG. 8 shows a graph 150 of the activity results for the sample from the example described above relative to comparative catalyst compositions that do not include a substrate manufactured using exemplary techniques. The x-axis 132 represents temperature in degrees Celsius and a y-axis 152 represents the activity. The catalysts were tested using the simulated exhaust gas stream as described above, which included the distillation cut of the summer blend ULSD fuel.

With reference to FIG. 8, the sample manufactured according to an embodiment of the invention showed relatively better activity results 154 relative to the results 156 of the comparative catalyst compositions. The comparative catalyst compositions showed relatively lower activities compared with the embodiment of the catalyst composition manufactured using the templating agent.

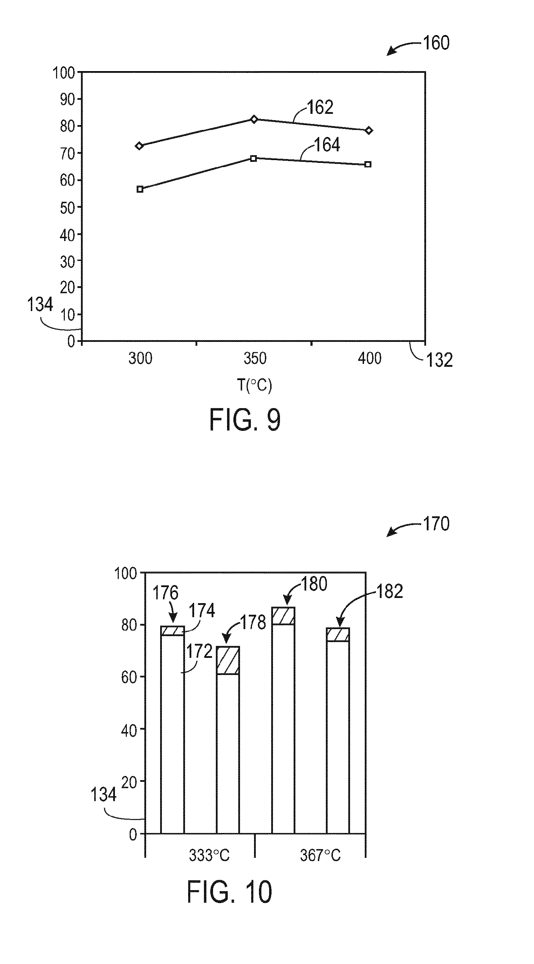

FIG. 9 shows a graph 160 of the NOₓ conversion results for the sample from the example described above prepared using γ-cyclodextrin relative to a comparative catalyst composition prepared using glucose. The x-axis 132 represents temperature in degrees Celsius and the y-axis 134 represents the percent conversion of NOₓ to nitrogen and ammonia. Both catalysts were tested using the simulated exhaust gas stream as described above, which included the distillation cut of the summer blend ULSD fuel.

With reference to FIG. 9, the sample manufactured according to an embodiment using γ-cyclodextrin showed relatively better NOₓ conversion results 162 relative to the results 164 of the comparative catalyst composition prepared using glucose. In FIG. 9, the NOₓ conversion for the exemplary sample was in a range of from about 73 percent to 83 percent. The comparative catalyst composition prepared using glucose showed relatively lower conversion capabilities compared with the exemplary catalyst composition manufactured using γ-cyclodextrin. Thus, not all sugars used in the preparation of catalyst compositions may be expected to result in catalyst compositions with similar NOₓ conversion capabilities. Indeed, the chemical structure of cyclodextrins may be one factor in the creation of exemplary catalyst compositions with desired NOₓ conversion capabilities.

FIG. 10 shows a bar chart 170 of the NOₓ conversion results for the sample from the example described above prepared using γ-cyclodextrin relative to another sample prepared according to the example above using half the quantity of γ-cyclodextrin, namely 11.6 g. The y-axis 134 represents the percent conversion of NO_{X} to nitrogen and ammonia. A first portion 172 of each bar represents an average of several test runs and a second portion 174 represents a standard deviation of the test runs. Both catalysts were tested using the simulated exhaust gas stream as described above, which included the distillation cut of the summer blend ULSD fuel.

With reference to the data at 333 degrees Celsius in FIG. 10, the sample manufactured according to an embodiment using 23.2 g of γ-cyclodextrin showed relatively better NOₓ conversion results 176 relative to the results 178 of the exemplary catalyst composition prepared using half of the γ-cyclodextrin. Similarly, the data collected at 367 degrees Celsius shows that the NOₓ conversion results 180 were relatively better than the results 182 of the exemplary catalyst composition prepared using half of the γ-cyclodextrin. In FIG. 10, the NOₓ conversion for the exemplary sample using 23.2 g of γ-cyclodextrin was in a range of from about 6 percent to 14 percent better than the exemplary sample prepared using half of the γ-cyclodextrin. The exemplary catalyst composition prepared using half of the γ-cyclodextrin showed relatively lower conversion capabilities compared with the exemplary catalyst composition manufactured using 23.2 g of γ-cyclodextrin. Thus, a relationship may exist between the concentration of cyclodextrins used in the preparation of catalyst compositions and the NOₓ conversion capabilities of the prepared exemplary catalyst compositions.

With regard to the term "reaction product," reference is made to substances, components, or ingredients in existence at the time just before first contacted, formed in situ, blended, or mixed with one or more other substances, components, or ingredients in accordance with the present disclosure. A substance, component, or ingredient identified as a reaction product may gain an identity, property, or character through a chemical reaction or transformation during the course of contacting, in situ formation, blending, or mixing operation if conducted in accordance with this disclosure with the application of common sense and the ordinary skill of one in the relevant art (e.g., chemist). The transformation of chemical reactants or starting materials to chemical products or final materials is a continually evolving process, independent of the speed at which it occurs. Accordingly, as such a transformative process is in progress there may be a mix of starting and final materials, as well as intermediate species that may be, depending on their kinetic lifetime, easy or difficult to detect with current analytical techniques known to those of ordinary skill in the art.

Reactants and components referred to by chemical name or formula in the specification or claims hereof, whether referred to in the singular or plural, may be identified as they exist prior to coming into contact with another substance referred to by chemical name or chemical type (e.g., another reactant or a solvent). Preliminary and/or transitional chemical changes, transformations, or reactions, if any, that take place in the resulting mixture, solution, or reaction medium may be identified as intermediate species, master batches, and the like, and may have utility distinct from the utility of the reaction product or final material. Other subsequent changes, transformations, or reactions may result from bringing the specified reactants and/or components together under the conditions called for pursuant to this disclosure. In these other subsequent changes, transformations, or reactions the reactants, ingredients, or the components to be brought together may identify or indicate the reaction product.

All ranges disclosed herein are inclusive of the endpoints, and the endpoints are combinable with each other. The terms "first," "second," and the like as used herein do not denote any order, quantity, or importance, but rather are used to distinguish one element from another, unless otherwise indicated. The use of the terms "a" and "an" and "the" and similar referents in the context of describing the invention (especially in the context of the following claims) are to be construed to cover both the singular and the plural, unless otherwise indicated herein or contradicted by context.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A catalyst composition, comprising:
   a catalytic metal secured to a substrate, wherein the substrate has pores that are templated, and wherein the catalyst composition is prepared by a process comprising the steps of:
      mixing a catalytic metal salt, a templating agent, and water to form a mixture;
      adding a substrate precursor to the mixture to form a slurry; and
      calcining the slurry to form a substrate having a porous template that is capable of supporting the catalyst composition.
2. The catalyst composition of clause 1, wherein the templating agent comprises α-cyclodextrin, β-cyclodextrin, or γ-cyclodextrin.
3. The catalyst composition of clause 1, wherein the catalytic metal comprises silver, gold, palladium, platinum, cobalt, nickel, iron, or a transition metal.
4. The catalyst composition of clause 1, wherein the catalytic metal comprises at least one promoting metal selected from the group consisting of gallium, indium, gold, vanadium, zirconium, zinc, tin, bismuth, cobalt, rhodium, platinum, molybdenum, and tungsten.
5. The catalyst composition of clause 1, wherein the pores have a single point pore volume of greater than about 0.5 cubic centimeters per gram.
6. The catalyst composition of clause 1, wherein the pores have an average diameter of greater than about 45 nanometers.
7. The catalyst composition of clause 1, wherein the surface area of the catalyst composition is greater than about 200 m²/gram.
8. The catalyst composition of clause 1, wherein the catalytic metal is capable of reducing or eliminating NOₓ in an exhaust gas stream in contact therewith in the presence of diesel fuel at determined operating conditions.
9. A catalyst composition, comprising:
   a catalytic metal secured to a porous substrate, wherein the porous substrate is a product of adding a substrate precursor to a mixture comprising a catalytic metal salt,
   a templating agent, and water.
10. The catalyst composition of clause 9, wherein the porous substrate comprises an inorganic oxide.
11. The catalyst composition of clause 9, wherein the mixture comprises a modifier.
12. The catalyst composition of clause 9, wherein the solvent comprises cyclohexane, hexane, heptane, or octane.
13. The catalyst composition of clause 9, wherein the catalytic metal salt comprises silver nitrate.
14. The catalyst composition of clause 9, wherein the substrate precursor comprises an inorganic alkoxide.
15. The catalyst composition of clause 9, wherein the templating agent comprises a surfactant, a crown ether, or a cyclodextrin.
16. The catalyst composition of clause 15, wherein the surfactant is cetyltrimethylammonium bromide, cetylpyridinium chloride, polyethoxylated tallow amine, benzalkonium chloride, benzethonium chloride, sodium dodecyl sulfate, ammonium lauryl sulfate, alkyl sulfate salts, sodium laureth sulfate, alkyl benzene sulfonate, fatty acid salts, sodium dioctyl sulfonate, dodecyl betaine, dodecyl dimethylamine oxide, cocamidopropyl betaine, coco ampho-glycinate, alkyl poly (ethylene oxide), poly (isobutylene)-block-poly (ethylene oxide), poly (styrene)-block-poly (ethylene oxide), octyl glucoside, octylphenol ethoxylate, decyl maltoside, fatty alcohols, cetyl alcohol, oleyl alcohol, cocamide monoethanolamine, cocamide diethanolamine, cocamide triethanolamine, (4-(1,1,3,3-tetramethylbutyl)phenyl-poly (ethylene glycol), polysorbitan monooleate, a long-chain alkyl amine, a primary alkylamine, or N,N-dimethylalkylamine.
17. The catalyst composition of clause 15, wherein the crown ether is 18-crown-6.
18. The catalyst composition of clause 15, wherein the cyclodextrin is α-cyclodextrin, β-cyclodextrin, or γ-cyclodextrin.
19. The catalyst composition of clause 9, wherein the catalyst composition is in the form of a monolith.
20. A method, comprising:
   mixing a catalytic metal salt, a templating agent, and water to form a mixture;
   adding a substrate precursor to the mixture to form a slurry; and
   calcining the slurry to form a substrate having a porous template that is capable of supporting a catalyst composition.
21. The method of clause 20, wherein the templating agent comprises α-cyclodextrin, β-cyclodextrin, or γ-cyclodextrin.
22. The method of clause 20, wherein the catalyst composition comprises a catalytic metal secured to the substrate, wherein the substrate has pores that are templated.
23. The method of clause 20, comprising contacting the catalyst composition to an exhaust gas stream having NOₓ therein, such that the catalyst composition reduces or eliminates the NOₓ in the presence of diesel fuel during determined operating conditions.
24. The method of clause 20, comprising controlling particle size of catalytic metal by reducing the catalytic metal lability or propensity to agglomerate.
25. The method of clause 20, comprising controlling particle size of catalytic metal by controlling, with respect to pore formation of the porous template, one or more of pore size, pore volume, pore distribution, pore spacing, or pore dispersity.

## Claims

1. A catalyst composition, comprising:
a catalytic metal secured to a substrate, wherein the substrate has pores that are templated, and wherein the catalyst composition is prepared by a process comprising the steps of:
mixing (98) a catalytic metal salt, a templating agent, and water to form a mixture;
adding (100) a substrate precursor to the mixture to form a slurry; and
calcining (110) the slurry to form a substrate having a porous template that is capable of supporting the catalyst composition.

2. The catalyst composition of claim 1, wherein the templating agent comprises α-cyclodextrin, β-cyclodextrin, or γ-cyclodextrin.

3. The catalyst composition of claim 1 or claim 2, wherein the catalytic metal comprises silver, gold, palladium, platinum, cobalt, nickel, iron, or a transition metal.

4. The catalyst composition of any preceding claim, wherein the catalytic metal comprises at least one promoting metal selected from the group consisting of gallium, indium, gold, vanadium, zirconium, zinc, tin, bismuth, cobalt, rhodium, platinum, molybdenum, and tungsten.

5. The catalyst composition of any preceding claim, wherein the pores have a single point pore volume of greater than about 0.5 cubic centimeters per gram.

6. The catalyst composition of any preceding claim, wherein the pores have an average diameter of greater than about 45 nanometers.

7. The catalyst composition of any preceding claim, wherein the surface area of the catalyst composition is greater than about 200 m²/gram.

8. The catalyst composition of any preceding claim, wherein the catalytic metal is capable of reducing or eliminating NOₓ in an exhaust gas stream in contact therewith in the presence of diesel fuel at determined operating conditions.

9. A catalyst composition, comprising:
a catalytic metal secured to a porous substrate, wherein the porous substrate is a product of adding (100) a substrate precursor to a mixture comprising a catalytic metal salt, a templating agent, and water.

10. The catalyst composition of claim 9, wherein the porous substrate comprises an inorganic oxide.

11. The catalyst composition of claim 9 or claim 10, wherein the mixture comprises a modifier.

12. The catalyst composition of any one of claims 9 to 11, wherein the solvent comprises cyclohexane, hexane, heptane, or octane.

13. The catalyst composition of any one of claims 9 to 12, wherein the catalytic metal salt comprises silver nitrate.

14. The catalyst composition of any one of claims 9 to 13, wherein the substrate precursor comprises an inorganic alkoxide.

15. The catalyst composition of any one of claims 9 to 14, wherein the templating agent comprises a surfactant, a crown ether, or a cyclodextrin.
